Europäisches Patentamt

European Patent Office

Office européen des brevets

(19)

(11) **EP 1 050 158 B1**

(12) **EUROPÄISCHE PATENTSCHRIFT**

(45) Veröffentlichungstag und Bekanntmachung des Hinweises auf die Patenterteilung:
**05.09.2001 Patentblatt 2001/36**

(21) Anmeldenummer: **98966643.3**

(22) Anmeldetag: **18.12.1998**

(51) Int Cl.$^7$: **H04N 1/409**, G01T 1/29

(86) Internationale Anmeldenummer:
**PCT/EP98/08323**

(87) Internationale Veröffentlichungsnummer:
**WO 99/39503 (05.08.1999 Gazette 1999/31)**

(54) **VERFAHREN UND ANORDNUNG ZUM AUSLESEN VON AUF EINER BILDPLATTE GESPEICHERTER STRAHLUNGSBILDINFORMATION**

METHOD AND DEVICE FOR READING OUT RADIATION IMAGE INFORMATION STORED ON A OPTICAL DISK

PROCEDE ET DISPOSITIF POUR EXTRAIRE DES DONNEES D'IMAGE DE RAYONNEMENT MEMORISEES SUR UN VIDEODISQUE

(84) Benannte Vertragsstaaten:
**DE FR GB IT**

(30) Priorität: **30.01.1998 DE 19803588**

(43) Veröffentlichungstag der Anmeldung:
**08.11.2000 Patentblatt 2000/45**

(73) Patentinhaber: **Steiner, Christof**
**76275 Ettlingen (DE)**

(72) Erfinder:
- **STEINER, Christof**
 **D-76275 Ettlingen (DE)**
- **OCHS, Rainer**
 **D-75323 Bad Wildbach (DE)**

(74) Vertreter: **Pfiz, Thomas, Dr. et al**
**Patentanwälte Wolf & Lutz**
**Hauptmannsreute 93**
**70193 Stuttgart (DE)**

(56) Entgegenhaltungen:
**EP-A- 0 098 574     EP-A- 0 594 070**
**EP-A- 0 658 778     DE-A- 2 636 368**
**US-A- 4 728 791     US-A- 4 749 861**
**US-A- 4 896 222     US-A- 5 151 596**
**US-A- 5 550 385**

- **PATENT ABSTRACTS OF JAPAN vol. 097, no. 010, 31. Oktober 1997 -& JP 09 146187 A (RICOH CO LTD), 6. Juni 1997**
- **PATENT ABSTRACTS OF JAPAN vol. 097, no. 010, 31. Oktober 1997 -& JP 09 149895 A (HITACHI MEDICAL CORP), 10. Juni 1997**

**Beschreibung**

Die Erfindung betrifft ein Verfahren und eine Anordnung zum Auslesen von auf einer Bildplatte, insbesondere einer mit einer kristallinen Speichersubstanz beschichteten Phosphorspeicherplatte durch Bestrahlung mit hochenergetischer Strahlung gespeicherter Strahlungsbildinformation nach dem Oberbegriff des Patentanspruchs 1 bzw. 10.

Bei bekannten Anordnungen dieser Art wird eine Bildplatte zur Aufnahme eines Strahlungsbildes beispielsweise in einem Elektronenmikroskop bestrahlt und in einem gesonderten Auslesegerät durch Abscannen unter Lumineszenz-Anregung optisch ausgelesen. Die verwendeten Bildplatten besitzen zwar eine hohe Dynamik, jedoch wird die Bildqualität durch Inhomogenitäten der Speicherschicht beeinträchtigt. Ein Problem besteht darin, daß Bilder verschiedener Scans aufgrund unterschiedlicher Orientierung der Bildplatte im Auslesegerät in der Regel einen Versatz gegeneinander aufweisen. Ein weiteres Problem liegt darin, die verwendete Bildplatte eindeutig zu identifizieren.

US-A-5 151 596 offenbart ein Verfahren zum Auslesen von auf einer Bildplatte durch Bestrahlung mit hochenergetischer Strahlung gespeicherter Strahlungsbildinformation. Das beim Abtasten von der Bildplatte reflektierte Ausleselicht wird fortlaufend als Reflexsignal erfaßt. Dieses wird Reflexsignal synchron mit dem Bildsignal in digitale Reflexwerte umgesetzt. Dadurch erkannte fehlerhafte Bildinformation wird dann entweder aus umliegenden Bildelementen interpoliert oder verworfen. In US-A-4 728 791 werden Rückreflexionseffekte korrigiert, indem für jedes Pixel das Rückstreulicht bei Bestrahlung eines Nachbarpixels mit Anregungslicht im voraus bestimmt und vom nachfolgend erfaßten Meßwert abgezogen wird.

Ausgehend hiervon liegt der Erfindung die Aufgabe zugrunde, ein Verfahren und eine Anordnung der gattungsgemäßen Art dahin zu verbessern, daß die Strahlungsbildinformation zuverlässig und mit geringen Fehlern behaftet ausgelesen werden kann. Speziell soll auch bei höheren Bestrahlungsintensitäten, bei denen statistische Rauschterme gegenüber systematischen Fehlern aufgrund von Bildplatteninhomogenitäten in den Hintergrund treten, eine hohe Bildqualität sichergestellt werden.

Zur Lösung dieser Aufgabe wird gemäß der Erfindung die im Patentanspruch 1 bzw. 10 angegebene Merkmalskombination vorgeschlagen. Vorteilhafte Ausgestaltungen und Weiterbildungen ergeben sich aus den abhängigen Ansprüchen.

Der Erfindung liegt die Erkenntnis zugrunde, daß das von der Bildplatte reflektierte Licht Korrelationen mit dem Lumineszenzlicht aufweist und somit ergänzend zur Auswertung der Strahlungsbildinformation genutzt werden kann. Dementsprechend ist es zur verfahrensmäßigen Lösung der genannten Aufgabe vorgesehen, daß das beim Abtasten von der Bildplatte reflektierte Ausleselicht fortlaufend als Reflexsignal erfaßt und das Reflexsignal synchron mit dem Bildsignal in digitale Reflexwerte umgesetzt wird. Damit lassen sich die erfaßten Werte einander eindeutig zuordnen und hinsichtlich ihrer Korrelation auswerten. Allgemein ergibt sich aus der Verarbeitung des Reflexlichts ein Informationsgewinn, der letztlich den möglichen Einsatzbereich von Bildplatten beträchtlich erweitert.

Ein besonders vorteilhafter Aspekt besteht darin, daß sich die Bildwerte zur Gewinnung der Strahlungsbildinformation nach Maßgabe der Reflexwerte korrigieren lassen. Dies kann allgemein dadurch erfolgen, daß aus den Reflexwerten den Bildpunkten zugeordnete Korrekturwerte bestimmt werden, und daß die Bildwerte mit den Korrekturwerten bildpunktweise skaliert werden.

Weiter ist es von besonderem Vorteil, wenn durch flächenhomogene Bestrahlung der Bildplatte ein Referenzbild aufgezeichnet wird. Damit ist es vor allem möglich, Korrelationen zwischen den parallel erfaßten Bild- und Reflexwerten durch einmalige Messung eindeutig zu bestimmen und zur Korrektur bzw. Verarbeitung beliebiger nichthomogener Nutzbilder zu verwerten. Vorteilhafterweise werden dabei aus den Bildwerten $B_R(z,\varphi)$ und Reflexwerten $R_R(z,\varphi)$ des Referenzbildes Korrelationsdaten $(a_k, K)$ bestimmt, und es werden die Bildwerte $B(z,\varphi)$ eines Nutzbildes nach Maßgabe von dessen mit den gespeicherten Korrelationsdaten $(a_k, K)$ verknüpften Reflexwerten $R(z,\varphi)$ korrigiert.

Besonders günstig ist es, wenn aus den Bild- und Reflexwerten des Referenzbildes die Korrelationsdaten im Fourier-Raum ermittelt werden. Hierfür wird die Varianz der Werte

$$B_R'(z,\varphi) = B_R(z,\varphi) \cdot \left[ a_k \cdot F_2^{-1} \left\{ F_2 \left\{ R_R(z,\varphi) \right\} \cdot K(u,v) \right\} \right]^{-1}$$

minimiert, wobei $B_R'$ korrigierte Bildwerte des Referenzbildes, $a_k$ einen zu variierenden Korrelationsfaktor, $K(u,v)$ zu variierende Korrelationskoeffizienten im Fourier-Raum, $F_2$ eine zweidimensionale Fourier-Transformation und $F_2^{-1}$ deren inverse Transformation bezeichnen. Mit den auf diese Weise ermittelten Korrelationen lassen sich die Bildwerte $B(z,\varphi)$ von Nutzbildern gemäß der Beziehung

$$B'(z,\varphi) = B(z,\varphi) \cdot \left[ a_k \cdot F_2^{-1} \left\{ F_2 \left\{ R_R(z,\varphi) \right\} \cdot K(u,v) \right\} \right]^{-1}$$

korrigieren, wobei B'(z,φ) die korrigierten Bildwerte des Nutzbildes, $a_k$ und K(u,v) die ermittelten und gespeicherten Korrelationsdaten, $F_2$ die zweidimensionale Fourier-Transformation und $F_2^{-1}$ deren inverse Transformation bezeichnen.

Ein weiterer vorteilhafter Aspekt der Reflexsignalauswertung besteht darin, daß ein Nutz- und Referenzbild bezüglich gemeinsamer Abtastkoordinaten aufeinander ausgerichtet werden können. Damit lassen sich unterschiedliche Fixierlagen der Bildplatte im Auslesegerät rechnerisch berücksichtigen, so daß eine Bildkorrektur anhand zuvor bezüglich gegebener Bildpunkt-Koordinaten ermittelter Daten möglich ist. Hierfür ist es vorteilhaft, durch Kreuzkorrelation der Reflexwerte R, $R_R$ eines Nutz- und Referenzbildes den Translationsvektor $\vec{r}$ und Drehwinkel α einer eine die einander zugeordneten Bildpunkte des Nutz- und Referenzbildes aufeinander abbildende Koordinatentransformation zu bestimmen.

Eine doppelte Korrektur hinsichtlich Fehlern durch Inhomogenitäten ist dadurch möglich, daß aus den Bildwerten B, $B_R$ eines Nutz- und Referenzbildes nach Maßgabe der zugeordneten Reflexwerte R, $R_R$ korrigierte Bildwerte B', $B'_R$ erzeugt werden, die korrigierten Bildwerte B', $B'_R$ aufeinander ausgerichtet und die ausgerichteten korrigierten Bildwerte B" des Nutzbildes mit den ausgerichteten korrigierten Bildwerten $B''_R$ des Referenzbildes skaliert werden.

Ein weiterer vorteilhafter Aspekt der Reflexlichterfassung besteht darin, daß durch Vergleich der Reflexwerte R eines Nutzbildes mit gespeicherten Reflexwerten $R_R$ von Referenzbildern verschiedener Bildplatten die zur Aufnahme des Nutzbildes verwendete Bildplatte aufgrund örtlich übereinstimmender Inhomogenitäten der Speicherschicht identifiziert werden kann.

Im Hinblick auf eine Anordnung wird zur Lösung der eingangs angegebenen Aufgabe vorgeschlagen, daß die Lese/Verarbeitungs-Einrichtung einen das beim Abtasten von der Bildplatte reflektierte Ausleselicht erfassenden zweiten Photodetektor und einen dessen Ausgangssignal in digitale Reflexwerte R(z,φ) umsetzenden zweiten Analog/Digital-Wandler aufweist. Die zweikanalige Erfassung ermöglicht eine Auswertung der Korrelationen zwischen Lumineszenz- und Reflexlichtsignal. Um die digitalisierten Werte der beiden Kanäle einander eindeutig zuweisen zu können, ist ein Taktgeber zur synchronen Ansteuerung der beiden Analog/Digital-Wandler vorgesehen. Damit lassen sich bei jedem Taktsignal ein Bild- und Reflexwert gleichzeitig erzeugen und einem durch die momentanen Abtastkoordinaten festgelegten Bildpunkt zuordnen.

Im folgenden wird die Erfindung anhand eines in der Zeichnung in schematischer Weise dargestellten Ausführungsbeispiels näher erläutert. Es zeigen

Fig. 1          eine Anordnung zum Auslesen von auf einer Bild-platte gespeicherter Strahlungsbildinformation;

Fig. 2a bis 2c      Diagramme zur Veranschaulichung der Korrektur eines Strahlungsbildes; und

Fig. 3a und b      Diagramme zur Veranschaulichung der Ausrichtung (Alignment) eines Strahlungsbildes.

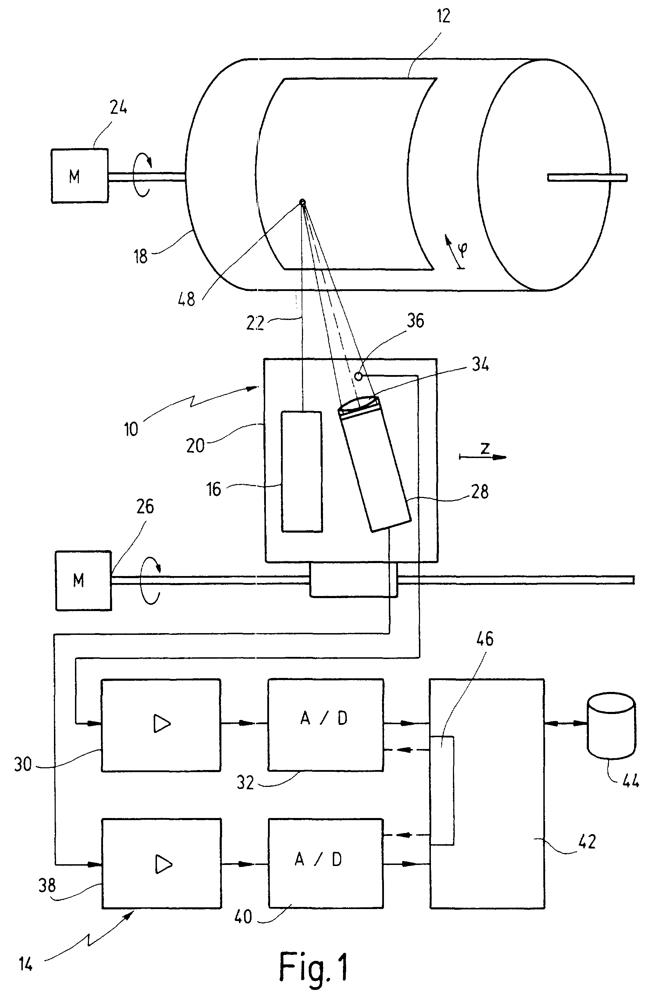

Die in Fig. 1 dargestellte Anordnung besteht im wesentlichen aus einer Abtasteinheit 10 zum optischen Abtasten einer Bild- bzw. Phosphorspeicherplatte 12 und einer Lese/Verarbeitungs-Einrichtung 14 zum Auslesen und Verarbeiten der in der Bildplatte 12 durch vorherige Strahlungsbelichtung beispielsweise mittels Röntgengerät oder Elektronenmikroskop aufgenommenen und durch Lichteinstrahlung wieder abfragbaren Strahlungsbildinformation.

Die Abtasteinheit 10 umfaßt eine durch einen Laser 16 gebildete Ausleselichtquelle und eine Scan-Vorrichtung 18, 20 zur Relativbewegung des von dem Laser 16 erzeugten Ausleselichtstrahls 22 und der Bildplatte 12, so daß deren durch eine kristalline Speicherschicht gebildete Oberfläche von dem punktförmig auffallenden Ausleselichtstrahl 22 überstrichen wird. Hierfür weist die Scan-Vorrichtung 18, 20 eine die flexible Bildplatte 12 mantelseitig in definierter Fixierlage aufnehmende, mittels Motor 24 um ihre Zentralachse drehbare Abtastwalze 18 und einen mittels Spindeltrieb 26 in axialer Richtung der Abtastwalze verfahrbaren, den gegen deren Mantelfläche gerichteten Laser 16 tragenden Abtastkopf 20 auf. Die momentanen Abtastkoordinaten des Ausleselichtstrahls 22 ergeben sich dabei aus der Drehlage φ der Abtastwalze und Verschiebelage z des Spindeltriebs 20 in einem Zylinderkoordinatensystem und können durch die nicht gezeigte Ansteuerung der Motoren 24, 26 erfaßt werden.

Der Ausleselichtstrahl stimuliert auf der Bildplatte 12 die Emission von Lumineszenzlicht, dessen Intensität von der gespeicherten Strahlungsbildinformation abhängt. Zum Auslesen des Lumineszenzlichts weist die Lese/Verarbeitungs-Einrichtung 14 einen ersten Signalkanal auf, der durch einen als Photomultiplier 28 ausgebildeten ersten Photodetektor, einen eingangsseitig mit dem ein Bildsignal liefernden Photomultiplier 28 verbundenen ersten Signalverstärker 30 und einen mit den Ausgangssignalen des Signalverstärkers 30 beaufschlagbaren ersten Analog-Digital-Wandler 32 gebildet ist. Ein optisches Filter 34 sorgt dafür, daß nur das Lumineszenzlicht in den Eintrittsquerschnitt des Photomultipliers 28 transmittiert wird.

Um einen beim Abtasten der Bildplatte 12 reflektierten Anteil des Ausleselichts zu erfassen, weist die Lese/Verarbeitungs-Einrichtung 14 einen zweiten Signalkanal auf, der durch einen beispielsweise als Photodiode ausgebildeten zweiten Photodetektor 36, einen eingangsseitig mit dem ein Reflexsignal liefernden zweiten Photodetektor 36 verbundenen zweiten Signalverstärker 38 und einen mit den Ausgangssignalen des zweiten Signalverstärkers 38 beaufschlagbaren zweiten Analog-Digital-Wandler 40 gebildet ist.

Zur Verarbeitung der digitalen Daten weist die Lese/Verarbeitungs-Einrichtung 14 einen Bildrechner 42 auf, der mit einem Speichermittel 44 verbunden ist. Weiter ist der Bildrechner 42 mit einem Taktgeber 46 gekoppelt, welcher die beiden Analog-Digital-Wandler 32, 40 synchron abhängig von den Abtastkoordinaten mit Taktimpulsen beaufschlagt. Bei jedem Taktimpuls werden die Lumineszenz-Bildsignale durch den ersten Analog-Digital-Wandler 32 in digitale Bildwerte B und die Reflexsignale durch den zweiten Analog-Digital-Wandler 40 in digitale Reflexwerte R umgesetzt und im Bildrechner 42 den Bildpunkte 48 auf der Bildplatte 12 definierenden momentanen Abtastkoordinaten $z, \varphi$ zugeordnet. Durch die Lumineszenz-Emission wird die auf der Bildplatte 12 gespeicherte Information "gelöscht", so daß die Bildplatte 12 zur erneuten Aufnahme eines Strahlungsbildes wiederverwendet werden kann.

Zur Korrektur von systematischen Bildfehlern, die durch Inhomogenitäten der Speicherschicht der Bildplatte 12 bedingt sind, kann die Strahlungsbildinformation in dem Bildrechner 42 aufbereitet werden. Dabei wird von der Erkenntnis Gebrauch gemacht, daß die Intensität des reflektierten Ausleselichtes davon abhängt, inwieweit der Ausleselichtstrahl in die Bildplatte 12 eindringen und ein Lumineszenz-Zentrum zur Emission anregen konnte. Dabei können je nach Oberfläche der Bildplatte 12 und der internen Plattenbeschaffenheit positive oder negative Korrelationen in der Signalstärke der Bild- und Reflexsignale auftreten. Diese Korrelationen lassen sich ausnutzen, um die Bildwerte $B(z, \varphi)$ nach Maßgabe der Reflexwerte $R(z, \varphi)$ rechnerisch zu korrigieren. Allgemein werden dabei in Abhängigkeit von den Reflexwerten $R(z, \varphi)$ den Bildpunkten zugeordnete Korrekturwerte $C(z, \varphi)$ bestimmt, mit denen sich die Bildwerte $B(z, \varphi)$ gemäß der Beziehung

$$B'(z, \varphi) = B(z, \varphi) \cdot \left[ a_k \cdot C(z, \varphi) \right]^{-1} \tag{1}$$

bildpunktweise skalieren lassen, wobei $B'(z, \varphi)$ die korrigierten Bildwerte und $a_k$ einen Korrelationsfaktor bezeichnet.

Die vorstehend beschriebenen Korrelationen lassen sich in vorteilhafter Weise dadurch bestimmen, daß durch flächenhomogene Bestrahlung der Bildplatte ein Referenzbild aufgezeichnet wird. Inhomogenitäten der Bildplatte 12 machen sich dann in entsprechenden Abweichungen der Bild- und Reflexwerte bemerkbar. Dies kann dazu verwendet werden, gesondert aufgenommene Nutz- bzw. Objektbilder hinsichtlich der durch Inhomogenitäten bedingten systematischen Fehler zu bereinigen. Allgemein läßt sich dies dadurch erreichen, daß zunächst aus den Bildwerten $B_R(z, \varphi)$ und Reflexwerten $R_R(z, \varphi)$ des Referenzbildes Korrelationsdaten $(a_k, K)$ bestimmt werden. Die Reflexwerte $R_R(z, \varphi)$ eines Nutzbildes können dann mit den Korrelationsdaten verknüpft werden, um anschließend die Bildwerte $B(z, \varphi)$ des Nutzbildes nach Maßgabe der korrelierten Reflexwerte zu korrigieren.

Zur Ermittlung der Korrelationsdaten können anstelle von Auswertungen im Ortsraum Korrelationen der Fourier-Komponenten des Bild- und Reflexsignals herangezogen und gegebenenfalls einer Frequenzkorrektur unterworfen werden. Dies läßt sich vorteilhaft dadurch bewerkstelligen, daß durch eine Programmroutine in dem Bildrechner 42 beispielsweise unter Berechnung kleinster Fehlerquadrate die Varianz der Werte

$$B'_R(z, \varphi) = B_R(z, \varphi) \cdot \left[ a_k \cdot F_2^{-1} \left\{ F_2 \left\{ R_R(z, \varphi) \right\} \cdot K(u, v) \right\} \right]^{-1} \tag{2}$$

minimiert wird, wobei $B'_R$ korrigierte Bildwerte des Referenzbildes, $a_k$ einen zu variierenden Korrelationsfaktor, $K(u, v)$ zu variierende Korrelationskoeffizienten im Fourier-Raum $(u, v)$, $F_2$ eine zweidimensionale Fourier-Transformation und $F_2^{-1}$ deren inverse Transformation bezeichnen. Mit den gemäß Gleichung (2) ermittelten, der Bildplatte 12 fest zugeordneten Korrelationsdaten können sodann entsprechend Gleichung (1) die Bildwerte $B(z, \varphi)$ von Nutzbildern gemäß der Beziehung

$$B'(z,\varphi) = B(z,\varphi) \cdot \left[ a_k \cdot F_2^{-1} \left\{ F_2 \left\{ R_R(z,\varphi) \right\} \cdot K(u,v) \right\} \right]^{-1} \qquad (3)$$

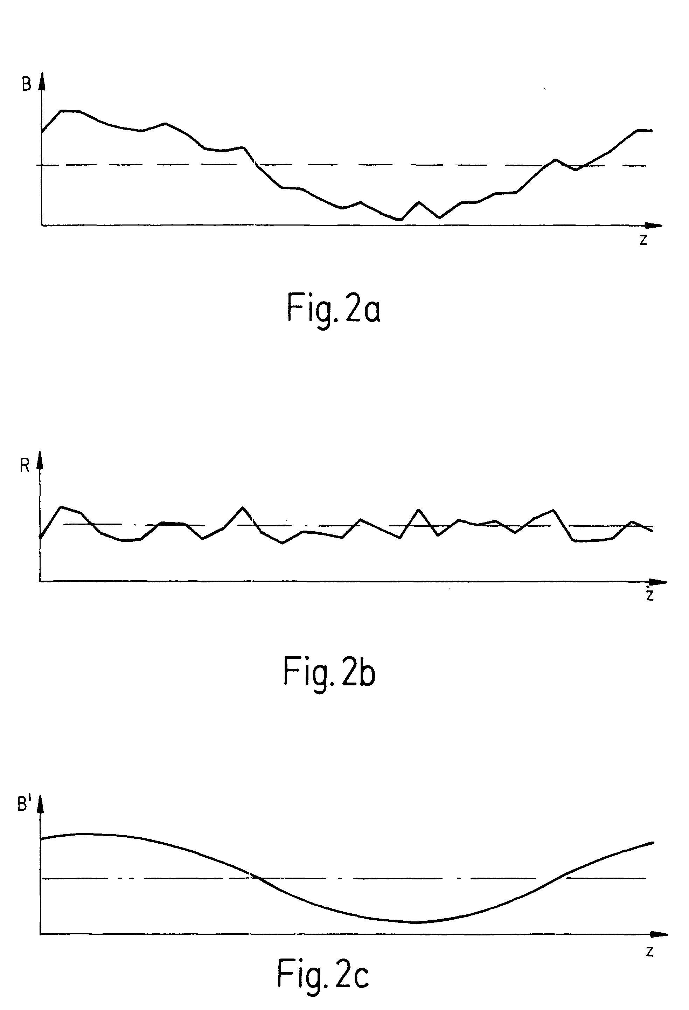

korrigiert werden. In Fig. 2 ist das Ergebnis des Korrekturverfahrens nach Gleichung (3) für eine zeilenförmig abgetastete Anzahl von diskreten, schaubildlich als durchgehende Linie gezeigte Einzeldaten veranschaulicht.

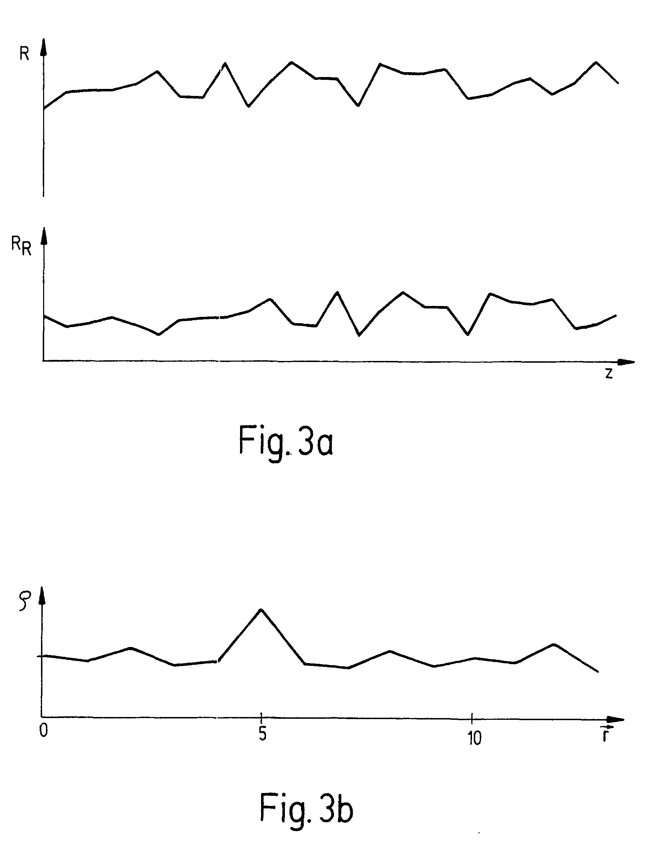

Durch Auswertung der Reflexwerte ist es ferner möglich, ein Nutz- und Referenzbild bezüglich gemeinsamer Abtastkoordinaten aufeinander auszurichten, wodurch sich abweichende Orientierungen der Bildplatte 12 auf der Abtastwalze 18 bei verschiedenen Scans rechnerisch kompensieren lassen. Hierzu können durch an sich bekannte Berechnungen der Kreuzkorrelation der Reflexwerte eines Nutz- und Referenzbildes der Translationsvektor $\vec{r}$ und Drehwinkel $\alpha$ einer Koordinatentransformation bestimmt werden, welche die einander zugeordneten Bildpunkte des Nutz- und Referenzbildes aufeinander abbildet. Aus Fig. 3b geht wiederum für eine Anzahl zeilenförmig abgetasteter Reflexwerte R eines Nutzbildes und $R_R$ eines Referenzbildes (Fig. 3a) beispielhaft hervor, daß der Korrelationskoeffizient $\rho$ ein Maximum bei $\vec{r} = 5$ aufweist, entsprechend einer Bildverschiebung in z-Richtung um fünf Bildpunkte.

Die zweikanalige Erfassung von Lumineszenz- und Reflexlicht läßt sich somit ausnutzen, um in einer doppelten Bildkorrektur zunächst aus den Bildwerten B, $B_R$ eines Nutz- und Referenzbildes gemäß Gleichung (1) bzw. (3) korrigierte Bildwerte B', $B'_R$ zu erzeugen, sodann die korrigierten Bildwerte B', $B'_R$ aufeinander auszurichten, und anschließend die ausgerichteten korrigierten Bildwerte B'' des Nutzbildes mit den ausgerichteten korrigierten Bildwerten $B''_R$ des Referenzbildes gemäß der Vorschrift

$$B''' = \frac{B''}{m \cdot B''_R} \qquad (5)$$

zu skalieren, wobei m ein konstanter Faktor ist.

Schließlich ist es durch Vergleich der Reflexwerte R eines Nutzbildes mit gespeicherten Reflexwerten $R_R$ von Referenzbildern verschiedener Bildplatten auch möglich, die zur Aufnahme des Nutzbildes verwendete Bildplatte zu identifizieren.

**Patentansprüche**

1. Verfahren zum Auslesen von auf einer Bildplatte (12), insbesondere einer mit einer kristallinen Speichersubstanz beschichteten Phosphorspeicherplatte durch Bestrahlung mit hochenergetischer Strahlung gespeicherter Strahlungsbildinformation, bei welchem die Bildplatte (12) mittels eines Ausleselichtstrahls (22), vorzugsweise eines Laserstrahls abgetastet wird, und das beim Abtasten von der Bildplatte (12) emittierte Lumineszenzlicht fortlaufend als Bildsignal erfaßt und unter Zuordnung zu Bildpunkte definierenden momentanen Abtastkoordinaten (z,$\varphi$) des Ausleselichtstrahls (22) in die Strahlungsbildinformation enthaltende digitale Bildwerte B(z,$\varphi$) umgesetzt wird, wobei das beim Abtasten von der Bildplatte (12) reflektierte Ausleselicht fortlaufend als Reflexsignal erfaßt und das Reflexsignal synchron mit dem Bildsignal in digitale Reflexwerte R(z,$\varphi$) umgesetzt wird, **dadurch gekennzeichnet,** daß aus den Reflexwerten R(z,$\varphi$) den Bildpunkten zugeordnete Korrekturwerte C(z,$\varphi$) bestimmt werden, und daß die Bildwerte B(z,$\varphi$) mit den Korrekturwerten bildpunktweise skaliert werden.

2. Verfahren nach Anspruch 1, **dadurch gekennzeichnet,** daß durch flächenhomogene Bestrahlung der Bildplatte (12) ein Referenzbild aufgezeichnet wird, und daß gesondert nach oder vor dem Referenzbild auf der Bildplatte (12) aufgenommene Nutzbilder mittels der gespeicherten Reflexwerte $R_R$ (z, $\varphi$) und/oder Bildwerte $B_R(z,\varphi)$ des Referenzbildes oder daraus ermittelter Daten verarbeitet werden.

3. Verfahren nach Anspruch 2, **dadurch gekennzeichnet,** daß aus den Bildwerten $B_R(z,\varphi)$ und Reflexwerten $R_R(z,\varphi)$ des Referenzbildes Korrelationsdaten ($a_k$,K) bestimmt werden, und daß die Bildwerte B(z,$\varphi$) eines Nutzbildes nach Maßgabe von dessen mit den gespeicherten Korrelationsdaten ($a_k$,K) verknüpften Reflexwerten R(z,$\varphi$) korrigiert werden.

4. Verfahren nach Anspruch 2 oder 3, **dadurch gekennzeichnet**, daß zur Ermittlung von Korrelationsdaten ($a_k$,K) aus den Bild- und Reflexwerten die Varianz der Werte

$$B'_R(z,\phi) = B_R(z,\phi) \cdot \left[\epsilon_k \cdot F_2^{-1}\left\{F_2\left\{R_R(z,\phi)\right\} \cdot K(u,v)\right\}\right]^{-1}$$

minimiert wird, wobei B'$_R$ korrigierte Bildwerte des Referenzbildes, a$_k$ einen zu variierenden Korrelationsfaktor, K (u,v) zu variierende Korrelationskoeffizienten im Fourier-Raum, F$_2$ eine zweidimensionale Fourier-Transformation und F$_2^{-1}$ deren inverse Transformation bezeichnen.

5.  Verfahren nach Anspruch 3 oder 4, **dadurch gekennzeichnet,** daß die Bildwerte B(z,φ) von Nutzbildern gemäß der Beziehung

$$B'(z,\phi) = B(z,\phi) \cdot \left[a_k \cdot F_2^{-1}\left\{F_2\left\{R_R(z,\phi)\right\} \cdot K(u,v)\right\}\right]^{-1}$$

korrigiert werden, wobei B'(z,φ) die korrigierten Bildwerte des Nutzbildes, a$_k$ und K(u,v) die ermittelten Korrelationsdaten, F$_2$ die zweidimensionale Fourier-Transformation und F$_2^{-1}$ deren inverse Transformation bezeichnen.

6.  Verfahren nach einem der Ansprüche 2 bis 5, **dadurch gekennzeichnet,** daß durch Auswertung der Reflexwerte R, R$_R$ ein Nutz- und Referenzbild bezüglich gemeinsamer Abtastkoordinaten aufeinander ausgerichtet werden.

7.  Verfahren nach einem der Ansprüche 2 bis 6, **dadurch gekennzeichnet,** daß durch Kreuzkorrelation der Reflexwerte R, R$_R$ eines Nutz- und Referenzbildes der Translationsvektor $\vec{r}$ und Drehwinkel α einer die einander zugeordneten Bildpunkte des Nutz- und Referenzbildes aufeinander abbildenden Koordinatentransformation bestimmt wird.

8.  Verfahren nach Anspruch 6 oder 7, **dadurch gekennzeichnet,** daß aus den Bildwerten. B, B$_R$ eines Nutz- und Referenzbildes nach Maßgabe der zugeordneten Reflexwerte R, R$_R$ korrigierte Bildwerte B', B'$_R$ erzeugt werden, daß die korrigierten Bildwerte B', B'$_R$ aufeinander ausgerichtet werden, und daß die ausgerichteten korrigierten Bildwerte B" des Nutzbildes mit den ausgerichteten korrigierten Bildwerten B"$_R$ des Referenzbildes skaliert werden.

9.  Verfahren nach einem der Ansprüche 2 bis 8, **dadurch gekennzeichnet,** daß durch Vergleich der Reflexwerte R eines Nutzbildes mit gespeicherten Reflexwerten R$_R$ von Referenzbildern verschiedener Bildplatten die zur Aufnahme des Nutzbildes verwendete Bildplatte (12) identifiziert wird.

10. Anordnung zum Auslesen von auf einer Bildplatte (12), insbesondere einer mit einer kristallinen Speichersubstanz beschichteten Phosphorspeicherplatte durch Bestrahlung mit hochenergetischer Strahlung gespeicherter Strahlungsbildinformation, mit einer vorzugsweise einen Laser (16) aufweisenden Abtasteinheit (10) zum Abtasten der Bildplatte (12) mittels eines Ausleselichtstrahls (22), und einer Lese/Verarbeitungs-Einrichtung (14), welche einen das beim Abtasten der Bildplatte (12) emittierte Lumineszenzlichts als analoges Bildsignal erfassenden ersten Photodetektor (28) und einen ersten Analog-Digital-Wandler (32) zum Umsetzen des Bildsignals in die Strablungsbildinformation enthaltende digitale Bildwerte B(z,φ) sowie einen das beim Abtasten von der Bildplatte (12) reflektierte Ausleselicht erfassenden zweiten Photodetektor (36) und einen dessen Ausgangssignal in digitale Reflexwerte R(z,φ) umsetzenden zweiten Analog-Digital-Wandler (40) aufweist, gekennzeichnet durch einen Bildrechner (42), welcher aus den Reflexwerten R(z,φ) den Bildpunkten zugeordnete Korrekturwerte C(z,φ) bestimmt und die Bildwerte B(z,φ) mit den Korrekturwerten bildpunktweise skaliert.

11. Anordnung nach Anspruch 12, **dadurch gekennzeichnet**, daß die Lese/Verarbeitungs-Einrichtung (14) einen Taktgeber (46) zur synchronen Ansteuerung des ersten und zweiten Analog-Digital-Wanglers (32,40) aufweist.

## Claims

1.  Process for reading radiation image information stored on an image medium (12), in particular radiation image information formed by high energy radiation of a phosphorus storage plate coated with a crystalline storage substance, wherein the image medium (12) is scanned with a readout light beam (22), preferably a laser beam, and wherein during scanning of the image medium (12) the emitted luminescence light is continuously detected as an image signal and, with allocation of image-point defining instantaneous scanned coordinates $(z,\varphi)$ of the readout light beam (22) is converted into radiation image information containing digital image values $B(z,\varphi)$, wherein the readout light reflected during scanning of the image medium (12) is continuously detected as a reflection signal and the reflection signal in synchrony with the image signal is converted into digital reflection values $R(z,\varphi)$, thereby characterized, that the image-point associated correction values $C(z,\varphi)$ are determined from the reflection values $R(z,\varphi)$, and that the image values $B(z,\varphi)$ are image-point-wise scaled with the correction values.

2. Process according to Claim 1, thereby characterized, that a reference image is produced by surface homogenous radiation of an image medium (12), then separately processing images taken on the image medium (12) after or before the reference image by means of the stored reflection values $R_R(z,\varphi)$ and/or image values $B_R(z,\varphi)$ of the reference image or data derived therefrom.

3. Process according to Claim 2, thereby characterized, that from the image values $B_R(z,\varphi)$ and reflection values $R_R(z,\varphi)$ of the reference image correlation data $(a_k,K)$ are determined, and that the image values $B(z,\varphi)$ of a work image are corrected according to the magnitude of the stored correlation data $(a_k,K)$ associated reference values $R(z,\varphi)$.

4. Process according to Claim 2 or 3, thereby characterized, that for determining the correlation data $(a_k,K)$ from the image and reflection values the variance of the values

$$B'_R(z,\varphi) = B_R(z,\varphi) \cdot [a_k \cdot F_2^{-1}\{F_2\{R_R(z,\varphi)\}\cdot K(u,v)\}]^{-1}$$

is minimized, wherein $B'_R$ corresponds to corrected image values of the reference image, $a_k$ corresponds to a correlation factor to be varied, $K(u,v)$ corresponds to a correlation co-efficient to be varied in the Fourier area $(u,v)$, $F_2$ corresponds to a two dimensional Fourier transform and $F_2^{-1}$ corresponds to an inverse transformation.

5. Process according to Claims 3 or 4, thereby characterized, that the image values $B(z,\varphi)$ of work images are corrected according to the formula

$$B'(z,\varphi) = B(z,\varphi) \cdot [a_k \cdot F_2^{-1}\{F_2\{R_R(z,\varphi)\} \cdot K(u,v)\}]^{-1}$$

wherein $B'(z,\varphi)$ corresponds to the corrected image value of the work image, $a_k$ and $K(u,v)$ corresponds to the determined correlation data, $F_2$ corresponds to the two dimensional Fourier transform and $F_2^{-1}$ corresponds to an inverse transformation.

6. Process according to one of Claims 2 through 5, thereby characterized, that during evaluation of the reflection values $R$, $R_R$ a work and a reference image are aligned or rectified with respect to each other with reference to common scan coordinates.

7. Process according to one of Claims 2 through 6, thereby characterized, that via the cross-correlation of the reflection values $R$, $R_R$ of a work and a reference image, the translation vector $\vec{r}$ and rotation angle $\alpha$ of a coordinate transformation is determined mapping the corresponding associated image points of the work and reference images to each other.

8. Process according to Claim 6 or 7, thereby characterized, that from the image values $B$, $B_R$ of a work and a reference image, in accordance with the magnitude of the associated reflection value $R$, $R_R$ corrected image values $B'$, $B'_R$ are produced, that the corrected image values $B'$, $B'_R$ are aligned or rectified to each other, and that the aligned or rectified corrected image values $B''$ of the work image is scaled with the alligned or rectified corrected image values $B''_R$ of the reference image.

9. Process according to one of Claims 2 through 8, thereby characterized, that by comparison of the reflection values $R$ of a work image with stored reflection values $R_R$ of reference images of various individual image substrates the specific image substrate (12) used for production of the work image is identified.

**10.** Device for reading radiation image information stored on an image medium (12), in particular radiation image information formed by the high energy irradiation of a phosphorus storage plate coated with a crystalline storage substance, with a scanner unit (10) preferably including a laser (16) for scanning the image medium (12) by means of a readout light beam (22), and a scanner/processing device (14), which includes a first photo-detector (28) for detecting as an analog image signal the luminescence light emitted during the scanning of the image medium (12) and a first analogdigital converter (32) for conversion of the image signal into radiation image information containing digital image values B(z,φ), as well as a second photo-detector (36) for detecting the readout light reflected during the scanning of the image plate (12) and a second analog-digital converter (24) for converting this output signal into digital reflection values R(z,φ), characterized by an image computer (42) which determines the image-point associated correction values C(z,φ) from the reflection values R(z,φ) , and which scales image values B(z,φ) image-point-wise with the correction values.

**11.** Device according to Claim 12, thereby characterized, that the scanner/processor device (14) includes a clock pulse generator (46) for synchronizing the control of the first and second analog-digital converters (32,40).


**Revendications**

**1.** Procédé pour extraire les informations d'image de rayonnement mémorisées par irradiation avec un rayonnement haute tension sur un disque vidéo (12), en particulier une cible phosphorescente recouverte d'une substance cristalline à mémoire, dans lequel le disque vidéo (12) est balayé au moyen d'un rayon de lumière d'extraction (22), de préférence un rayon laser, et la lumière luminescente émise lors du balayage du disque vidéo (12) est détectée en continu sous la forme d'un signal vidéo et convertie par affectation de coordonnées de balayage (z, φ) momentanées, définissant des pixels, du rayon de lumière d'extraction (22) en valeurs d'image B(z,φ) numériques contenant les informations d'image de rayonnement, la lumière d'extraction réfléchie par le disque vidéo (12) lors du balayage étant détectée en continu sous la forme d'un signal de réflexion et le signal de réflexion étant converti en synchronisme avec le signal vidéo en valeurs de réflexion R(z,φ) numériques, **caractérisé en ce qu'**à partir des valeurs de réflexion R(z,φ), des valeurs de correction C(z,φ) affectées aux pixels sont déterminées, et en ce que les valeurs d'image B(z,φ) sont cadrées pixel par pixel avec les valeurs de correction.

**2.** Procédé selon la revendication 1, **caractérisé en ce qu'**une irradiation de surface homogène du disque vidéo (12) permet d'enregistrer une image de référence, et en ce que des images utiles enregistrées sur le disque vidéo (12) avant ou après l'image de référence sont traitées au moyen des valeurs de réflexion $R_R(z,φ)$ mémorisées et/ou des valeurs d'image $B_R(z,φ)$ de l'image de référence ou de données déterminées à partir de celles-ci.

**3.** Procédé selon la revendication 2, **caractérisé en ce que** des données de corrélation $(a_k,K)$ sont déterminées à partir des valeurs d'image $B_R(z,φ)$ et des valeurs de réflexion $R_R(z,φ)$ de l'image de référence, et en ce que les valeurs d'image B(z,φ) d'une image utile sont corrigées conformément à ses valeurs de réflexion R(z,φ) associées aux données de corrélation $(a_k,K)$ mémorisées.

**4.** Procédé selon la revendication 2 ou 3, **caractérisé en ce que** pour la détermination des données de corrélation $(a_k,K)$, la variance des valeurs

$$B'_R(z, φ) = B_R(z, φ) \cdot [a_k \cdot F_2^{-1}\{F_2\{R_R(z, φ)\} \cdot K(u, v)\}]^{-1}$$

est minimisée à partir des valeurs d'image et de réflexion, $B'_R$ désignant des valeurs d'image corrigées de l'image de référence, $a_k$ un facteur de corrélation à faire varier, K(u,v) des coefficients de corrélation à faire varier dans l'espace Fourier, $F_2$ une transformation de Fourier bidimensionnelle et $F_2^{-1}$ sa transformation inverse.

**5.** Procédé selon la revendication 3 ou 4, **caractérisé en ce que** les valeurs d'image B(z,φ) d'images utiles sont corrigées selon la relation

$$B'(z, φ) = B(z, φ) \cdot [a_k \cdot F_2^{-1}\{F_2\{R_R(z,φ)\} \cdot K(u, v)\}]^{-1},$$

B'(z,φ) désignant les valeurs d'image corrigées de l'image utile, $a_k$ et K(u,v) les données de corrélation déterminées, $F_2$ la transformation de Fourier bidimensionnelle et $F_2^{-1}$ sa transformation inverse.

**6.** Procédé selon l'une des revendications 2 à 5, **caractérisé en ce que** l'évaluation des valeurs de réflexion R, $R_R$ permet d'aligner mutuellement une image utile et une image de référence par rapport à des coordonnées de balayage communes.

**7.** Procédé selon l'une des revendications 2 à 6, **caractérisé en ce que** la corrélation croisée des valeurs de réflexion R, $R_R$ d'une image utile et d'une image de référence permet de déterminer le vecteur de translation F et l'angle de rotation $\alpha$ d'une transformation de coordonnées qui reproduit les uns sur les autres les pixels mutuellement affectés de l'image utile et de l'image de référence.

**8.** Procédé selon la revendication 6 ou 7, **caractérisé en ce que** des valeurs d'image B', $B'_R$ corrigées sont générées à partir des valeurs d'image B, $B_R$ d'une image utile et d'une image de référence conformément aux valeurs de réflexion R, $R_R$ associées, en ce que les valeurs d'image B', $B'_R$ corrigées sont alignées les unes sur les autres, et en ce que les valeurs d'image B'' corrigées alignées de l'image utile sont cadrées avec les valeurs d'image $B''_R$ corrigées alignées de l'image de référence.

**9.** Procédé selon l'une quelconque des revendications 2 à 8, **caractérisé en ce que** la comparaison des valeurs de réflexion R d'une image utile avec des valeurs de réflexion $R_R$ mémorisées appartenant à des images de référence de différents disques vidéo permet d'identifier le disque vidéo (12) utilisé pour l'enregistrement de l'image utile.

**10.** Dispositif pour extraire des informations d'image de rayonnement mémorisées par irradiation avec un rayonnement haute tension sur un disque vidéo (12), en particulier une cible phosphorescente recouverte d'une substance cristalline à mémoire, comprenant une unité de balayage (10) présentant de préférence un laser (16) pour balayer le disque vidéo (12) au moyen d'un rayon de lumière d'extraction (22), et un dispositif d'extraction/ traitement (14) qui présente un premier photodétecteur (28) détectant la lumière luminescente émise lors du balayage du disque vidéo (12) sous la forme d'un signal vidéo analogique, et un premier convertisseur analogique/ numérique (32) pour convertir le signal vidéo en valeurs d'image $B(z,\varphi)$ numériques contenant des informations d'image de rayonnement, ainsi qu'un deuxième photodétecteur (36) détectant la lumière d'extraction réfléchie lors du balayage du disque vidéo (12) et un deuxième convertisseur analogique/ numérique (40) convertissant le signal de sortie de celui-ci en valeurs de réflexion $R(z, \varphi)$ numériques, caractérisé par un calculateur vidéo (42) qui détermine à partir des valeurs de réflexion $R(z,\varphi)$ des valeurs de correction $C(z,\varphi)$ affectées aux pixels et cadre les valeurs d'image $B(z,\varphi)$ avec les valeurs de correction, pixel par pixel.

**11.** Dispositif selon la revendication 10, **caractérisé en ce que** le dispositif d'extraction/ traitement (14) présente un générateur de rythme (46) pour la commande synchrone du premier et du deuxième convertisseur analogique/ numérique (32, 40).

Fig.1

Fig. 2a

Fig. 2b

Fig. 2c

Fig. 3a

Fig. 3b